## Europäisches Patentamt

## European Patent Office

## Office européen des brevets

(11) Veröffentlichungsnummer : **0 316 299 B1**

(12) **EUROPÄISCHE PATENTSCHRIFT**

(45) Veröffentlichungstag der Patentschrift :
**01.07.92 Patentblatt 92/27**

(21) Anmeldenummer : **88890276.4**

(22) Anmeldetag : **07.11.88**

(51) Int. Cl.⁵ : $C21B$ **13/14**

(54) **Verfahren zum Entzinken des Materialflusses beim Betrieb einer Anlage zur Roheisenerzeugung.**

(30) Priorität : **12.11.87 AT 2994/87**

(43) Veröffentlichungstag der Anmeldung :
**17.05.89 Patentblatt 89/20**

(45) Bekanntmachung des Hinweises auf die
Patenterteilung :
**01.07.92 Patentblatt 92/27**

(84) Benannte Vertragsstaaten :
**DE FR GB IT**

(56) Entgegenhaltungen :
**EP-A- 0 105 542**
**EP-A- 0 182 775**
**DE-A- 3 603 894**
**DE-C- 658 356**
**US-A- 2 836 487**
**US-A- 3 975 188**

(73) Patentinhaber : **DEUTSCHE VOEST-ALPINE**
**INDUSTRIEANLAGENBAU GMBH**
**Neusser Strasse 111**
**W-4000 Düsseldorf 1 (DE)**

(72) Erfinder : **Kepplinger, Werner, Dipl.-Ing, Dr.**
**Lahholdstrasse 7**
**A-4020 Linz (AT)**

(74) Vertreter : **Wolfram, Gustav, Dipl.-Ing.**
**Patentanwälte Sonn, Pawloy, Weinzinger &**
**Wolfram Riemergasse 14**
**A-1010 Wien (AT)**

**Beschreibung**

Die Erfindung betrifft ein Verfahren zum Entzinken des Materialflusses beim Betrieb einer Anlage zur Roheisenerzeugung, wobei eisenoxidhältige, teilchenförmige Einsatzstoffe in einem Direktreduktionsschachtofen durch ein Reduktionsgas reduziert, die erhaltenen Eisenschwammpartikel in einem Einschmelzvergaser unter Zuführung von Kohle und sauerstoffhältigem Gas bei gleichzeitiger Bildung des Reduktionsgases eingeschmolzen werden, das Reduktionsgas gekühlt und entstaubt, der Reduktionszone des Schachtofens zugeführt, der abgeschiedene Staub in die Einschmelzzone des Einschmelzvergasers rückgeführt und überschüssiges Reduktionsgas nach Waschen und Kühlen Fremdverbrauchern zugeführt wird.

Anlagen und Betriebsverfahren dieser Art sind bekannt. Ihr Prinzip beruht darauf, daß das in einem Schachtofen vorreduzierte, eisenoxidhältige Material, u.zw. Eisenschwammpartikel mit einem Metallisationsgrad bis zu etwa 95 %, in einen Einschmelzvergaser eingebracht wird, dem Kohle und Sauerstoff zugeführt wird, wobei sich eine Wirbelschicht mit hoher Temperatur ausbildet. Die Eisenschwammpartikel werden darin niedergeschmolzen und sammeln sich im Bodenteil des Einschmelzvergasers. Durch Vergasung der Einsatzstoffe wird das Reduktionsgas erzeugt, welches dem Direktreduktionsschachtofen zugeführt wird. Überschüssiges Reduktionsgas aus dem Einschmelzvergaser und Topgas aus dem Direktreduktionsschachtofen kann Fremdverbrauchern überlassen werden.

Das Verfahren eignet sich besonders für Standorte zur Roheisenerzeugung, die über wenig oder keine verkokbare Kohle verfügen. Das Verfahren ist flexibel in der Rohstoffwahl und von wirtschaftlicher Bedeutung.

Eine Schwierigkeit beim Betrieb solcher Anlagen besteht darin, daß infolge des Kreislaufes der Stäube und Gase der Materialfluß mit der Zeit durch Fremdmetalle angereichert wird, wobei sich Zink als nachteilig erwiesen hat. Normalerweise wird das mit etwa 1000°C aus dem Einschmelzvergaser abgezogene rohe Reduktionsgas auf 800°C abgekühlt und in einem Zyklon entstaubt, bevor es in den Direktreduktionsschachtofen eingeführt und der abgeschiedene Staub in den Einschmelzvergaser rückgeführt wird. Bei dieser Vorbehandlung schlägt sich ein Großteil der Zinkdämpfe (etwa 80 %) auf den Kohlestaubpartikeln nieder, das Zink gelangt mit der Staubrückführung in den Einschmelzvergaser zurück und bewegt sich im Kreis.

Ein anderer Teil des Zinks, etwa 20 %, wird von dem Reduktionsgas mitgeführt; der Teil des Reduktionsgases, der für die Reduktion gebraucht wird, kommt (samt mitgeführtem Zink) in den Direktreduktionsschachtofen; so weit Reduktionsgas überschüssig ist, wird es in einem Einspritzkühler neuerlich entstaubt und als Reingas abgeführt. Der verbleibende Staub wird mit dem Abfallschlamm verworfen. Bei dieser Arbeitsweise wird also im Kreislauf das Zink immer mehr angereichert und kann dann bis zu 20 kg/t im Materialfluß zwischen Einschmelzvergaser und Enstaubungszyklon ausmachen.

Die Erfindung bezweckt die Vermeidung der geschilderten Schwierigkeiten und stellt sich die Aufgabe, ein einfaches und wirkungsvolles Verfahren zu schaffen, mit dem der Großteil des Zinks aus dem Materialfluß entfernt werden kann, das Zink in konzentrierter Form gewonnen wird und als Zinkquelle anderen Interessenten zur Verfügung gestellt werden kann.

Die Erfindung ist bei einem Verfahren der eingangs bezeichneten Art dadurch gekennzeichnet, daß die Entstaubung des Reduktionsgases zweistufig durchgeführt wird, derart, daß in der ersten Stufe ohne oder mit schwacher Kühlung bei Austrittstemperatur des Reduktionsgases aus dem Einschmelzvergaser - bei etwa 1000°C - gearbeitet wird, wobei ein zinkarmer, hauptsächlich aus Kohleteilchen bestehender Staub anfällt, der in den Einschmelzvergaser zurückgeführt wird, und in der zweiten Stufe nach Abkühlung des in der ersten Stufe teilweise entstaubten Gases bei etwa 800°C gearbeitet wird, wobei ein mit niedergeschlagenem metallischem Zink angereicherter Staub erhalten wird, der als Zinkkonzentrat zur Weiterverwertung gesammelt wird.

Vorzugsweise wird die Entstaubung in hintereinander geschalteten Zyklonen durchgeführt und dazwischen Kühlgas dem aus dem ersten Zyklon abgezogenen Gas zugeführt.

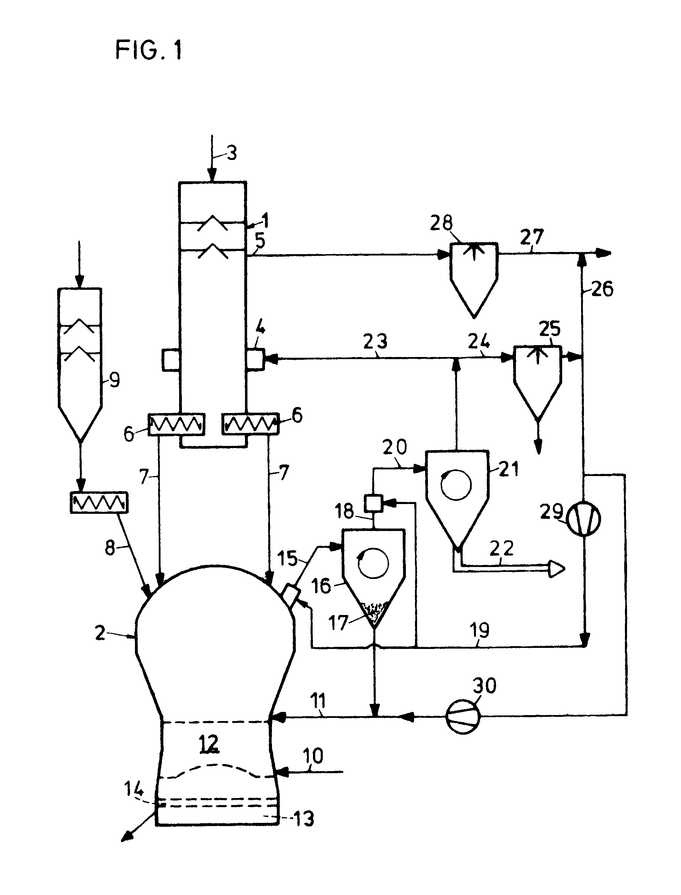

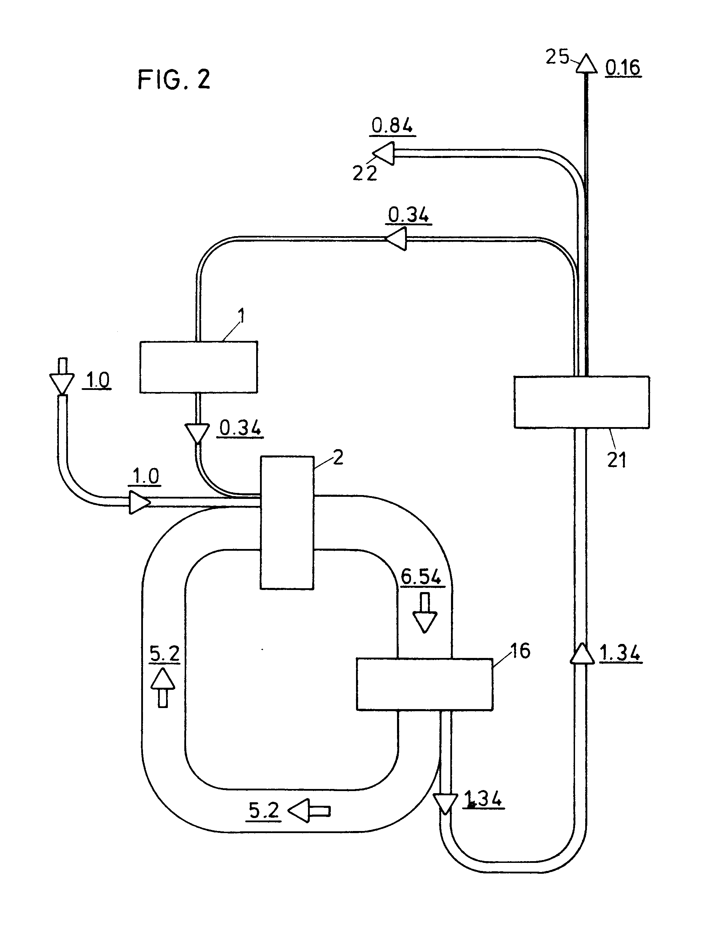

Das erfindungsgemäße Verfahren ist in der Zeichnung näher erläutert, wobei Fig. 1 das Verfahrensschema der Anlage und Fig. 2 ein Mengenflußdiagramm beim Betrieb dieser Anlage wiedergeben.

Mit 1 ist ein Direktreduktionsschachtofen und mit 2 ein Einschmelzvergaser bezeichnet, die zu einer baulichen Einheit verbunden sein können. Der Direktreduktionsschachtofen 1 weist eine Einführung 3 für feinteiliges Erz auf. Weiters besitzt der Direktreduktionsschachtofen im unteren Teil eine Einführung 4 für Reduktionsgas und im oberen Teil eine Ableitung 5 für das nach der Reaktion verbleibende Top- bzw. Gichtgas.

Der Einschmelzvergaser 2 wird über den Austrag 6 des Direktreduktionsschachtofens 1 und die Einführung 7 mit vorreduziertem Material, nämlich mit Eisenschwamm, beschickt. In den Einschmelzvergaser 2 mündet weiters eine Kohlezuführung 8, die mit dem Kohlebunker 9 verbunden ist. Weiters besitzt der Einschmelzvergaser 2 eine Zuführung 10 für Sauerstoff und eine Einführung 11 für rückzuführendes staubförmiges Einsatzmaterial.

Im mittleren Teil des Einschmelzvergasers 2 entsteht durch teilweise Vergasung der Einsatzstoffe ein Wirbelbett 12 von hoher Temperatur, in welchem das vorreduzierte Eisenschwamm-Material aufgeschmolzen wird. Flüssige Roheisen-Schmelze sammelt sich im Sumpf 13 am Boden des Einschmelzvergasers 2 und ist von einer Schlackenschicht 14 bedeckt. Das aus der zugeführten Kohle und Sauerstoff entwickelte rohe Reduktionsgas wird auf eine Temperatur von etwa 1000°C eingestellt und durch die Leitung 15 dem Heißzyklon 16 zugeführt. Dort wird in der ersten Stufe der Entstaubung erfindungsgemäß ein staubförmiges Produkt abgeschieden, das zum größten Teil aus Kohleteilchen 17 besteht. Der Entstaubungsgrad beträgt in dieser Stufe etwa 80 %.

Das verbleibende Gas wird über die Leitung 18 dem Heißzyklon 16 entnommen und durch Zuführung von Kühlgas aus der Leitung 19 auf etwa 800°C abgekühlt, bevor es durch die Leitung 20 in den zweiten Zyklon 21 eingebracht wird. In dieser zweiten Entstaubungsstufe im Zyklon 21 erfolgt eine weitere Entstaubung mit einem Abscheidegrad von etwa 65 %, wobei ein Festprodukt anfällt, das eine hohe Konzentration an Zink aufweist.

Während im ersten Zyklon 16 Zink in Form von Zinkdampf mit dem Reduktionsgas durchgeht, schlägt sich im zweiten Zyklon 21 der Zinkdampf metallisch auf den Festteilchen nieder. Die Feststoffteilchen mit hohem Zinkgehalt werden vom Boden des Zyklons 21 abgezogen und als Konzentrat 22 gesammelt. Dieses Konzentrat steht als Zinkquelle für eine Weiterverarbeitung im eigenen oder in fremden Betrieben zur Verfügung.

Das den Zyklon verlassende und nunmehr weitgehend gereinigte Reduktionsgas wird über die Leitung 23 der Einführung 4 des Direktreduktionsschachtofens 1 zugeführt, in einer Menge, die zur Reduktion des eisenoxidhältigen Einsatzmaterials erforderlich ist. Überschüssiges Reduktionsgas wird über die Abzweigleitung 24 in einem Einspritzkühler 25 gekühlt und von weiteren noch enthaltenen Feststoffen gereinigt. Das reine Gas, welches ein Überschußgas darstellt, wird über die Leitung 26 abgeführt und mit dem Topgas aus der Leitung 27, welches in einem vorgeschalteten Wäscher 28 gereinigt wurde, vereinigt. Es wird an Fremdbenutzer abgegeben.

Zur Anlage gehört weiters ein Kühlgasgebläse 29, welches Gas in die Kühlgasleitung 19 abgibt, und ein Treibgasgebläse 30 zur Förderung des Staubes in die Staubeinführung 11 des Einschmelzvergasers 2.

In Fig. 2 ist das Mengenflußdiagramm gemäß dem erfindungsgemäßen Verfahren dargestellt, worin die eingetragenen unterstrichenen Ziffern kg Zink pro t Roheisen bedeuten. Es wird eine Eingangsmenge von 1 kg Zink/t Roheisen angenommen. Im Kreislauf zwischen Einschmelzvergaser 2, in welchem eine Rohreduktionsgasmenge von 2000 m³/t Roheisen erzeugt wird, und dem Heißgaszyklon 16 wird eine Zinkmenge von 5,2 kg/t Roheisen umgewälzt. Dazu kommen aus dem Kreislauf zwischen Heißzyklon 16 und dem zweiten Zyklon 21 und dem Direktreduktionsschachtofen 1 weitere 0,34 kg Zink/t Roheisen. Das vom Heißzyklon 16 abgezogene Gas enthält 1,34 kg Zink/t; das aus dem zweiten Zyklon 21 abgezogene Konzentrat 0,84 kg Zink/t. Dies bedeutet, daß von der Eingangsmenge mehr als 80 % entzinkt worden ist und daß im Schlamm, welcher aus dem Einspritzkühler 25 anfällt, nur noch 0,16 kg Zink/t enthalten sind.

Arbeitet man hingegen mit nur einem Zyklon bei 800°C, wie es dem Stand der Technik eigen ist, würde bei gleicher Eingangsmenge von 1 kg Zink/t Roheisen zwischen Zyklon und Einschmelzvergaser eine Zinkmenge von 12,5 kg/t Roheisen umgewälzt werden, mit der Folge, daß nicht nur der Ausgangsschlamm einen höheren Zinkgehalt aufweist, sondern daß auch die Qualität des hergestellten Roheisens durch die Zinkverunreinigungen nachteilig beeinflußt wird.

**Patentansprüche**

1. Verfahren zum Entzinken des Materialflusses beim Betrieb einer Anlage zur Roheisenerzeugung, wobei eisenoxidhaltige, teilchenförmige Einsatzstoffe in einem Direktreduktionsschachtofen (1) durch ein Reduktionsgas reduziert, die erhaltenen Eisenschwammpartikel in einem Einschmelzvergaser (2) unter Zuführung von Kohle und sauerstoffhältigem Gas bei gleichzeitiger Bildung des Reduktionsgases eingeschmolzen werden, das Reduktionsgas gekühlt und entstaubt, der Reduktionszone des Schachtofens (1) zugeführt, der abgeschiedene Staub in die Einschmelzzone des Einschmelzvergasers (2) rückgeführt und überschüssiges Reduktionsgas nach Waschen und Kühlen Fremdverbrauchern zugeführt wird, dadurch gekennzeichnet, daß die Entstaubung des Reduktionsgases zweistufig durchgeführt wird, derart, daß in der ersten Stufe (16) eine Austrittstemperatur des Reduktionsgases aus dem Einschmelzvergaser (2) - bei etwa 1000°C eingestellt wird, wobei ein zinkarmer, hauptsächlich aus Kohleteilchen bestehender Staub anfällt, der in den Einschmelzvergaser (2) zurückgeführt wird, und in der zweiten Stufe (21) nach Abkühlung des in der ersten Stufe teilweise entstaubten Gases bei etwa 800°C gearbeitet wird, wobei ein mit niedergeschlagenem metallischem Zink angereicherter Staub erhalten wird, der als Zinkkonzentrat (22) zur Weiterverwertung gesammelt wird.

2. Verfahren nach Anspruch 1, dadurch gekennzeichnet, daß die Entstaubung in hintereinander geschalteten Zyklonen (16, 21) durchgeführt und dazwischen Kühlgas dem aus dem ersten Zyklon (16) abgezogenen Gas zugeführt wird.

## Claims

1. Process of dezincifying the material flow when operating a pig iron production plant, wherein iron-oxide containing, particulate charging substances are reduced in a direct reduction shaft furnace (1) by a reducing gas, the sponge iron particles obtained are melted in a meltdown gasifier (2) while supplying coal and oxygen-containing gas under simultaneous formation of the reducing gas, the reducing gas is cooled and dedusted, supplied to the reducing zone of the shaft furnace (1), the separated dust is returned into the meltdown zone of the meltdown gasifier (2) and excess reducing gas is made available to external consumers, after washing and cooling, characterised in that dedusting of the reducing gas is carried out in two steps, in a manner that, in the first step (16), an exit temperature of the reducing gas from the meltdown gasifier (2) is adjusted - at about 1000°C -, wherein a zinc-poor dust, mainly consisting of coal particles, is incurred, which is returned into the meltdown gasifier (2), and that, in the second step (21), after cooling of the gas partially dedusted in the first step, one operates at about 800°C, dust enriched with deposited metallic zinc being obtained, which is collected as a zinc concentrate (22) for further utilisation.

2. Process according to claim 1, characterised in that dedusting is carried out in consecutively arranged cyclones (16, 21), cooling gas being supplied therebetween to the gas withdrawn from the first cyclone (16).

## Revendications

1. Procédé pour le dézingage d'un flux de matières produit dans l'exploitation d'une installation de production de fonte brute, dans lequel les matières particulaires de la charge, qui contiennent de l'oxyde de fer, sont réduites par un gaz réducteur dans un four à cuve de réduction directe (1), les particules d'éponge de fer ainsi obtenues sont fondues dans un gazéificateur de fusion (2) avec introduction de charbon et de gaz oxygéné, avec production simultanée du gaz réducteur, le gaz réducteur est acheminé à la zone de réduction du four à cuve (1), à l'état refroidi et dépoussiéré, la poussière séparée est renvoyée à la zone de fusion du gazéificateur de fusion (2) et le gaz réducteur en excédent est acheminé à des consommateurs extérieurs après lavage et refroidissement, caractérisé en ce que le dépoussiérage du gaz réducteur est exécuté en deux étages, en ce sens que, dans le premier étage (16), on établit une température de sortie du gaz réducteur du gazéificateur de fusion (2) - d'environ 1000°C - et on obtient une poussière pauvre en zinc, principalement composée de particules de charbon et qui est renvoyée au gazéificateur de fusion (2), tandis que, dans le deuxième étage (21), après refroidissement du gaz qui a été partiellement dépoussiéré dans le premier étage, on travaille à environ 800°C, et on obtient une poussière enrichie en zinc métallique précipité qui est collectée en tant que concentré de zinc (22) pour être soumise à un traitement. ultérieur.

2. Procédé selon la revendication 1, caractérisé en ce que le dépoussiérage est exécuté dans des cyclones (16, 21) agencés l'un en aval de l'autre et, entre ces deux cyclones, un gaz de refroidissement est acheminé au gaz issu du premier cyclone (16).

FIG. 1

FIG. 2